# EUROPÄISCHE PATENTSCHRIFT

(11) **EP 1 279 181 B1**
(45) Veröffentlichungstag und Bekanntmachung des Hinweises auf die Patenterteilung: **02.02.2005**
(21) Anmeldenummer: 01933933.2
(22) Anmeldetag: 04.05.2001
(51) Int. Cl.: H01H 3/14

(54) **SENSORMATTE FÜR FAHRZEUGSITZ**
SENSOR MAT FOR A VEHICLE SEAT
MAT DETECTEUR POUR SIEGE DE VEHICULE

(30) Priorität: 05.05.2000 LU 90578
(43) Veröffentlichungstag der Anmeldung: 29.01.2003
(73) Patentinhaber: IEE INTERNATIONAL ELECTRONICS & ENGINEERING S.A., 6468 Echternach (LU)
(72) Erfinder: FEDERSPIEL, Laurent, 5366 Münchsbach (LU)
(74) Vertreter: Beissel, Jean
(86) Internationale Anmeldenummer: PCT/EP2001/005061
(87) Internationale Veröffentlichungsnummer: WO 2001/086676

(56) Entgegenhaltungen:
- EP-A- 0 395 172
- EP-A- 0 669 229
- WO-A-99/39168
- US-A- 5 895 900

## Beschreibung

Die vorliegende Erfindung betrifft eine Sensormatte zum Einbringen in einen Fahrzeugsitz, insbesondere eine Sensormatte in Folienbauweise.

Funktionselemente in Folienbauweise, wie z.B. Membranschalter, Fotiendrucksensoren o.ä., umfassen im allgemeinen mindestens zwei im wesentlichen elastische Folienschichten, die in einem gewissen Abstand zueinander angeordnet sind. Dies geschieht z.B. mittels eines Abstandhalters, der um den aktiven Bereich des Funktionselementes herum angeordnet ist und auf den die beiden Folienschichten mit ihren jeweiligen Rändern aufgeklebt sind. In dem aktiven Bereich des Funktionselementes sind auf die Folienschichten verschiedene Kontaktanordnungen aufgebracht zwischen denen beim Zusammendrücken der beiden Folienschichten ein elektrischer Kontakt hergestellt wird, so dass das Schaltelement ausgelöst wird. Beim Nachlassen des Drucks auf die Folienschichten nehmen diese aufgrund ihrer Elastizität wiederum ihre beabstandete Position zueinander ein und der elektrische Kontakt zwischen den verschiedenen Kontaktanordnungen wird unterbrochen.

Damit eine hohe Ansprechwahrscheinlichkeit für solche Funktionselemente bei ganz unterschiedlichen Umgebungsdrücken gewährleistet ist, weisen die Funktionselemente darüber hinaus im allgemeinen Ventilationskanäle auf, die den Zwischenraum zwischen den beiden Folienschichten mit der Umgebung verbinden und so einen Druckausgleich zwischen der Umgebung und dem Zwischenraum ermöglichen. Ein solches Funktionselement ist zum Beispiel in der US-A-4,314,227 beschrieben, die einen Foliendrucksensor mit druckabhängigem Widerstand betrifft.

Eine Sensormatte in Folienbauweise umfasst mehrere derartiger Funktionselemente, die über eine bestimmte Fläche verteilt sind. Die Funktionselemente bilden somit die aktiven Bereiche der Sensormatte. Sie sind durch elastische Verbindungsbahnen miteinander verbunden, in denen darüber hinaus die elektrischen Kontaktierungen der Funktionselemente verlaufen. Die elastischen Verbindungsbahnen werden durch die mittels des Abstandhalters zusammen laminierten Folienschichten gebildet und durch Ausstanzen von Bereichen ohne Funktionselemente aus einem flächigen Schichtaufbau hergestellt.

Auch bei einer solchen Sensormatte sind Ventilationskanäle vorhanden, die die im Bereich der Funktionselemente entstehenden Zwischenräume zwischen den beiden Trägerfolien mit der Umgebung verbinden. Die Ventilationskanäle verbinden dabei häufig jeweils mehrere Funktionselemente bzw. aktive Bereich der Sensormatte untereinander, wobei sie in den flexiblen Verbindungsbahnen verlaufen und an einem Ende an die Oberfläche des Schichtaufbaus münden. Um ein Eintreten von Wasser in die aktiven Bereiche der Sensormatte zu verhindem, werden die Einmündungen der Ventilationskanäle im allgemeinen mit einem luftdurchlässigen aber wasserundurchlässigen Material abgedeckt. Derartige Wasserbarrieren sind als Mikrofasergewebe unter Markennamen wie z.B. Gore Tex ® bekannt. Eine Sensormatte mit Ventilationskanälen, deren Einmündungen in die Oberfläche des Schichtaufbaus mit derartigen Mikrofaserflicken abgedeckt sind, ist beispielsweise aus der US 5,895 900 A bekannt.

Da eine Sensormatte im allgemeinen mehrere (z. B. 30 bis 40) Ventilationskanäle aufweist, die alle an unterschiedlichen Stellen in die Oberfläche des Schichtaufbaus münden, müssen bei den bekannten Sensormatten demnach dementsprechend viele Mikrofaserflicken auf der Sensormatte aufgebracht und fixiert werden. In Anbetracht der Tatsache, dass die in Frage kommenden Mikrofasergewebe gegenüber den anderen bei der Sensorherstellung verwendeten Materialien verhältnismäßig teuer sind, bedeutet dies jedoch eine nicht zu vemachlässigende Erhöhung der Produktionskosten eines solchen Sensors. Darüber hinaus ist das Aufkleben der Mikrofaserflicken relativ aufwendig und stellt eine zusätzliche potentielle Quelle für Produktionsfehler dar.

### Aufgabe der Erfindung

Aufgabe der vorliegenden Erfindung ist es folglich, eine vereinfachte Sensormatte für einen Fahrzeugsitz vorzuschlagen.

### Allgemeine Beschreibung der Erfindung

Diese Aufgabe wird erfindungsgemäß gelöst durch eine Sensormatte nach Anspruch 1. Die Schutzhülle kann dabei die gesamte Sensormatte oder lediglich die Verbindungsbahnen der Sensormatte vollständig umgeben.

Da die gesamte Sensormatte bzw. die flexiblen Verbindungsbahnen der Sensormatte vollständig von einer Schutzhülle umgeben ist, entfällt bei der vorliegenden Sensormatte demnach das Aufbringen einer Vielzahl von verhältnismäßig teueren Flicken aus Mikrofasergewebe auf die einzelnen Einmündungen der Ventilationskanäle. Hierdurch wird die Herstellung der Sensormatte einerseits vereinfacht, andererseits verringern sich die Herstellungskosten für die Matte. Das wasserundurchlässige Material kann bei der vorliegenden Sensormatte beispielsweise eine kostengünstige Kunststofffolie, z.B. eine PE-Folie, umfassen, in die die Sensormatte bzw. die Verbindungsbahnen der Sensormatte eingeschweißt werden.

Ein weiterer Vorteil einer solchen Schutzhülle liegt in der glatten Oberfläche einer Kunststofffolie. Aufgrund dieser glatten Oberfläche werden Quietschgeräusche zwischen der Sensormatte und einem Sitzschaum oder einem Sitzbezug eines Fahrzeugsitzes deutlich verringert.

Der Druckausgleich zwischen den einzelnen aktiven Bereichen und der Umgebung findet bei der erfindungsgemäßen Sensormatte z.B. innerhalb der Schutzhülle statt. Aus diesem Grund weist die Schutzhülle vorzugsweise einen Ausgleichsbehälter auf, der mit der Schutzhülle fluidleiten verbunden ist. Der Ausgleichsbehälter kann dabei beispielsweise mit der Schutzhülle einstückig verbunden sein, gegebenenfalls über einen verlängerten Verbindungskanal. In diesem Fall kann der Ausgleichsbehälter beim Einbringen der Sensormatte in einen Fahrzeugsitz vorteilhaft in einem Bereich des Sitzes angeordnet werden, der außerhalb der Sitzfläche des Sitzes liegt.

In einer vorteilhaften Ausgestaltung weist die Schutzhülle mindestens eine Entlüftungsöffnung auf, die mittels eines gasdurchlässigen aber wasserundurchlässigen Material abgedeckt ist. Bei dieser Ausgestaltung kann ein Druckausgleich auch zwischen der Schutzhülle und der Umgebung erfolgen. Die Entlüftungsöffnung ist vorzugsweise in einem Bereich der Schutzhülle angeordnet, der beim Einbringen der Sensormatte in einen Fahrzeugsitz außerhalb der Sitzfläche des Sitzes zu liegen kommt. Hierdurch ist sichergestellt, dass die Entlüftungsöffnung beim Aufkleben der Sensormatte auf den Sitzschaum nicht verklebt wird. Darüber hinaus kann hierdurch eine Beanspruchung der beispielsweise mittels eines Mikrofaserflickens abgedeckten Entlüftungsöffnung durch einen in dem Sitz einsitzenden Passagier wirksam vermieden werden.

Die Schutzhülle weist vorzugsweise eine oder mehrere Befestigungslaschen auf, die beispielsweise an einem äußeren Rand der Schutzhülle angeordnet sind. Diese Befestigungslaschen können beim Einbringen der Sensormattein einen Fahrzeugsitz vorteilhaft dazu benutzt werden, die Sensormatte z.B. an dem Sitzschaum oder der Sitzunterkonstruktion zu befestigen. Dies kann durch Verknoten der Befestigungslaschen erfolgen, bzw. durch Verkleben, Klammern o.ä.

In einer vorteilhaften Ausgestaltung bildet die Schutzhülle Verbindungsstege zwischen verschiedenen flexiblen Verbindungsbahnen aus. Hierdurch können an der eigentlichen Sensormatte Verbindungsbahnen eingespart werden, da die notwendige Verbindungsfunktion von der Schutzhülle übernommen wird. Hierdurch vereinfachen sich die Stanzmesser zum Ausstanzen der Sensormatte und die Messerlänge verringert sich. Das Ausstanzen der Sensormatte kann demnach mit kleineren Stanzkräften erfolgen und die Stanzpressen können entsprechend kleiner dimensioniert werden. Da die Verbindungsstege der Schutzhülle durch thermisches Verschweißen einer Kunststofffolie hergestellt werden spielen Kräfte bei diesem Prozess keine Rolle.

In einer weiteren vorteilhaften Ausgestaltung umgibt die Schutzhülle die Sensormatte mit einem gewissen Spiel, d.h. dass die Sensormatte im Inneren der Schutzhülle eine gewisse Beweglichkeit aufweist. Dies ist insbesondere dann von Vorteil, wenn die Sensormatte auf einen Fahrzeugsitz aufgeklebt werden soll bzw. wenn auf die Sensormatte ein anderes Funktionselement wie beispielsweise eine Sitzheizung aufgeklebt werden soll. Bei herkömmlichen Sensormatten, die zu einem derartigen Sandwichs verklebt werden, können beispielsweise durch Temperaturschwankungen Verwindungen entstehen, die zu Vorlasten der aktiven Bereiche führen und somit das Ansprechverhalten der Sensormatte beeinträchtigen. Bei der vorliegenden Ausgestaltung weist die Sensormatte auch nach dem Verkleben eine gewisse Beweglichkeit in der Schutzhülle auf, so dass keine Vorlasten entstehen können.

Es ist anzumerken, dass die Schutzhülle eine metallisierte Folie und/oder eine UV-undurchlässige Folie umfassen kann.

### Beschreibung anhand der Figuren

Im folgenden wird eine Ausgestaltung der Erfindung anhand der beiliegenden Figuren beschrieben. Es zeigen:
- Fig.1:: eine Ansicht einer vorteilhaften Ausgestaltung einer Sensormatte;
- Fig.2:: einen Schnitt durch eine flexible Verbindungsbahn einer Sensormatte;
- Fig.3:: einen Schnitt durch eine flexible Verbindungsbahn einer Sensormatte.

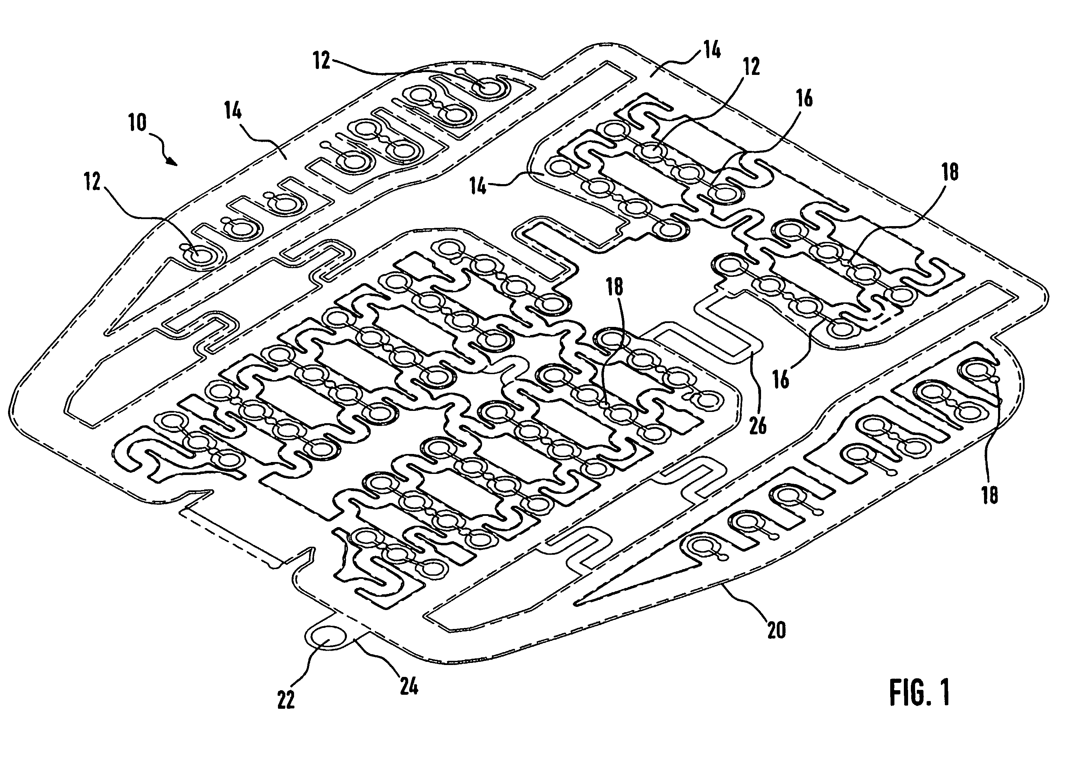

In Fig. 1 ist eine Sensormatte 10 dargestellt, die zum Einbau in einen Fahrzeugsitz optimiert ist. Die Sensormatte 10 umfasst eine Vielzahl aktiver Bereiche 12, die über eine bestimmte Fläche verteilt sind. Untereinander sind die aktiven Bereiche 12 durch flexible Verbindungsbahnen 14 untereinander verbunden, so dass eine zusammenhängende flächige Sensormatte gebildet wird.

Wie Sensormatte 10 ist vorzugsweise in Folienbauweise aufgebaut, wobei die aktiven Bereiche und die flexiblen Verbindungsbahnen zwei im wesentlichen elastische Folienschichten aufweisen, die durch einen Abstandhalter in einem gewissen Abstand zueinander angeordnet sind. Der Abstandhalter, zum Beispiel eine doppelseitige Klebefolie, weist zumindest im Bereich der aktiven Bereiche des Sensors jeweils eine Ausscheidung auf, so dass in diesem Bereiche zwischen den beiden Folienschichten ein Zwischenraum entsteht.

Um einen Druckausgleich zwischen den Zwischenraum und der Umgebung zu ermöglichen, weist sie Sensormatte 10 Ventilationskanäle 16 auf, die teilweise mehrere aktive Bereiche 12 untereinander verbinden und jeweils an mindestens einer Stelle 18 an die Oberfläche des durch die zusammenlaminierten Folienschichten gebildeten Sandwichaufbaus einmünden.

Um ein eintreten von Wasser durch die Ventilationskanäle 16 in die aktiven Bereiche 12 zu verhindern, ist die Sensormatte von einer Schutzhülle 20 umgeben. Die Schutzhülle 20 weist beispielsweise eine metallisierte Folie auf, in die die Sensormatte bzw. die flexiblen Verbindungsbahnen der Sensormatte eingeschweißt sind. Eine Kunststofffolie wie zum Beispiel eine PE-Folie bildet eine gute Wasserbarriere und kann somit ein eindringen von Wasser in die aktiven Bereiche der Sensormatte verhindern. Der Druckausgleich zwischen den aktiven Bereichen und der Umgebung findet somit im inneren der Schutzhülle 20 statt.

Die Sensormatte 10 weist vorzugsweise ein gewisses Spiel innerhalb der Schutzhülle 20 auf, so dass sie auch nach dem Einbringen der Sensormatte in einen Fahrzeugsitz zum Beispiel durch Aufkleben auf einen Sitzschaum bzw. durch Einschäumen in den Sitzschaum eine gewisse Beweglichkeit aufweist. Hierdurch können Vorlasten auf die aktiven Bereiche 12 der Sensormatte 10 wirksam vermieden werden.

Um einen Druckausgleich zwischen der Schutzhülle und der Umgebung zu ermöglichen, weist die Schutzhülle 20 an mindestens einer Stelle eine Ventilationsöffnung 22 auf. Die Ventilationsöffnung 22 ist vorzugsweise in einem Ansatz 24 der Schutzhülle 20 angeordnet, so dass die Ventilationsöffnung 22 nach dem Einbringen der Sensormatte in einen Fahrzeugsitz in einem Bereich angeordnet ist, der außerhalb der Sitzfläche des Fahrzeugsitzes liegt. Die Ventilationsöffnung 22 ist vorzugsweise durch einen Flicken aus einem gasdurchlässigen aber wasserundurchlässigen Material, zum Beispiel einem Mikrofasergewebe, abgedeckt, so dass ein Eintreten von Wasser in die Schutzhülle 20 verhindert werden kann.

Die rechte Seite der in Fig. 1 dargestellten Sensormatte 10 veranschaulicht eine besonders vorteilhafte Ausgestaltung der Schutzhülle 20. in der Tat bildet die Schutzhülle 20 auf dieser Seite Verbindungsstege 26 zwischen einzelnen Verbindungsbahnen 14 aus, so dass in diesen Bereichen Verbindungsbahnen der eigentlichen Sensormatte eingespart werden können. Die Verdingungsstege 26 können beispielsweise durch flächiges Zusammenschweißen der oberen und der unteren Kunststofffolie der Schutzhülle 20 hergestellt werden.

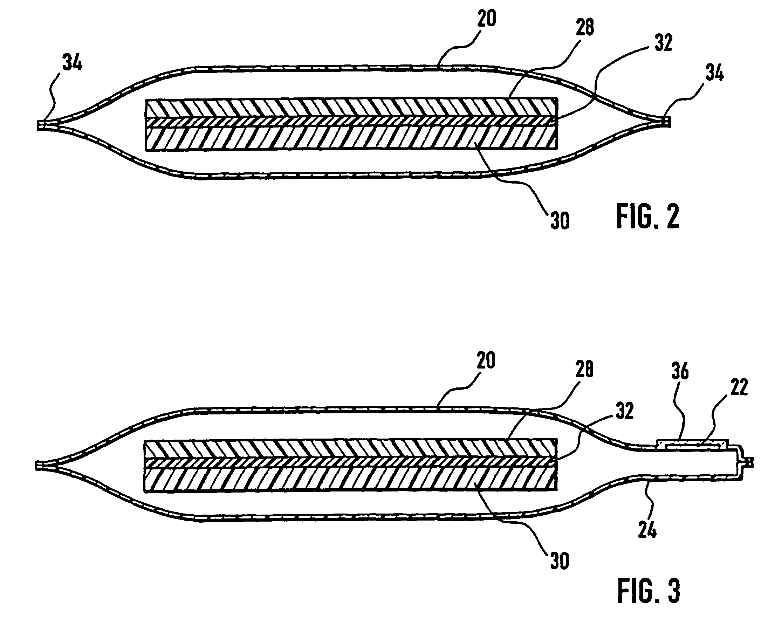

Die Figuren 2 und 3 zeigen Schnitte durch eine flexible Verbindungsbahn einer Sensormatte, wobei der Schnitt bei der Fig. 3 in dem Bereich der Ventilationsöffnung 22 der Schutzhülle 20 liegt. Man erkennt jeweils eine obere Folienschicht 28 und eine untere Folienschicht 30, die mittels eines Abstandhalters 32 zusammenlaminiert sind. Die so gebildete Sandwichstruktur der eigentlichen Sensormatte wird von einer Schutzhülle 20 umgeben, die aus zwei Kunststofffolien besteht, die an ihren Rändern 34 zusammengeschweißt sind. In der Fig. 3 erkennt man zusätzlich einen Ansatz 24 der Schutzhülle 20, in dem eine Ventilationsöffnung 22 angebracht ist. Um ein eindringen von Wasser in die Schutzhülle 20 zu verhindern ist die Ventilationsöffnung 22 dabei mit einem Flicken 36 aus einem gasdurchlässigen aber wasserundurchlässigen Material abgedeckt.

## Patentansprüche

1. Sensormatte in Folienbauweise (10) umfassend mehrere aktive Bereiche (12) die untereinander durch flexible Verbindungsbahnen (14) verbunden sind, wobei die Sensormatte (10) zwei im wesentlichen elastische Folienschichten (28, 30) aufweist, die durch einen Abstandhalter (32) in einem gewissen Abstand zueinander angeordnet sind, und wobei die aktiven Bereiche (12) jeweils in einer Aussparung des Abstandhalters (32) angeordnet sind, **gekennzeichnet durch** eine zusätzliche flexible Schutzhülle (20) aus einem wasserundurchlässigen Material.

2. Sensormatte nach Anspruch 1, **dadurch gekennzeichnet, dass** die Schutzhülle (20) die Sensormatte (10) vollständig umgibt.

3. Sensormatte nach Anspruch 1, **dadurch gekennzeichnet, dass** die Schutzhülle (20) die Verbindungsbahnen (14) der Sensormatte (10) vollständig umgibt.

4. Sensormatte nach einem der Ansprüche 1 bis 3, **dadurch gekennzeichnet, dass** die Schutzhülle (20) einen Ausgleichsbehälter aufweist, der mit der Schutzhülle (20) fluidleiten verbunden ist.

5. Sensormatte nach Anspruch 4, **dadurch gekennzeichnet, dass** der Ausgleichsbehälter mit der Schutzhülle (20) einstückig verbunden ist.

6. Sensormatte nach einem der Ansprüche 4 oder 5, **dadurch gekennzeichnet, dass** der Ausgleichsbehälter über einen verlängerten Verbindungskanal mit der Schutzhülle (20) verbunden ist.

7. Sensormatte nach einem der Ansprüche 1 bis 6, **dadurch gekennzeichnet, dass** die Schutzhülle (20) eine Entlüftungsöffnung (22) aufweist, die mittels eines gasdurchlässigen aber wasserundurchlässigen Material abgedeckt ist.

8. Sensormatte nach einem der Ansprüche 1 bis 7, **dadurch gekennzeichnet, dass** die Schutzhülle (20) eine oder mehrere Befestigungslaschen aufweist.

9. Sensormatte nach einem der Ansprüche 1 bis 8, **dadurch gekennzeichnet, dass** die Schutzhülle (20) Verbindungsstege (26) zwischen verschiedenen flexiblen Verbindungsbahnen (14) ausbildet.

10. Sensormatte nach einem der vorhergehenden Ansprüche, **dadurch gekennzeichnet, dass** die Verbindungsbahnen (14) in die Schutzhülle (20) eingeschweißt sind.

11. Sensormatte nach einem der vorhergehenden Ansprüche, **dadurch gekennzeichnet, dass** die Schutzhülle (20) die Sensormatte (10) mit einem gewissen Spiel umgibt.

12. Sensormatte nach einem der vorhergehenden Ansprüche, **dadurch gekennzeichnet, dass** die Schutzhülle (20) eine PE-Folie umfasst.

13. Sensormatte nach einem der vorhergehenden Ansprüche, **dadurch gekennzeichnet, dass** die Schutzhülle (20) eine metallisierte Folie umfasst.

14. Sensormatte nach einem der vorhergehenden Ansprüche, **dadurch gekennzeichnet, dass** die Schutzhüfte (20) eine UV-undurchlässige Folie umfasst.

## Claims

1. Foil-type sensor mat (10) including a plurality of active zones (12) connected to each other by flexible connecting lines (14), the sensor mat (10) possessing two substantially elastic foil-layers (28, 30) arranged in a specific distance apart from each other by means of a spacer (32) and wherein the active zones (12) are arranged in a recess of the spacer (32) respectively, **characterized by** an additional flexible protective sheath (20) made of a material impervious to water.

2. Sensor mat according to Claim 1, **characterized in that** the protective sheath (20) entirely endoses the sensor mat (10).

3. Sensor mat according to Claim 1, **characterized in that** the protective sheath (20) entirely encloses the connecting lines (14) of the sensor mat (10).

4. Sensor mat according to anyone of Claims 1 to 3, **characterized in that** the protective sheath (20) comprises a compensation vessel connected to the protective sheath (20) so as to permit the passage of a fluid.

5. Sensor mat according to Claim 4, **characterized in that** the compensation vessel is joined to the protective sheath (20) to form a single unit.

6. Sensor mat according to anyone of Claims 4 or 5, **characterized in that** the compensation vessel is connected to the protective sheath (20) via an extended connecting channel.

7. Sensor mat according to anyone of Claims 1 to 6, **characterized in that** the protective sheath (20) comprises a vent opening (22) covered by a material which is permeable to gases but impervious to water.

8. Sensor mat according to anyone of Claims 1 to 7, **characterized in that** the protective sheath (20) comprises one or more fastening straps.

9. Sensor mat according to anyone of Claims 1 to 8, **characterized in that** the protective sheath (20) forms connecting bridges (26) between different flexible connecting lines (14).

10. Sensor mat according to anyone of the preceding Claims, **characterized in that** the connecting lines (14) are welded into the protective sheath (20).

11. Sensor mat according to anyone of the preceding Claims, **characterized in that** the protective sheath (20) surrounds the sensor mat (10) with a certain clearance.

12. Sensor mat according to anyone of the preceding Claims, **characterized in that** the protective sheath (20) comprises a PE foil.

13. Sensor mat according to anyone of the preceding Claims, **characterized in that** the protective sheath (20) comprises a metallized foil.

14. Sensor mat according to anyone of the preceding Claims, **characterized in that** the protective sheath (20) comprises a foil impervious to UV.

## Revendications

1. Tapis détecteur réalisé en feuilles (10), comprenant plusieurs zones actives (12) qui sont reliées entre elles par des bandes de connexion flexibles (14), le tapis détecteur (10) comportant deux couches de feuille (28, 30) sensiblement élastiques, lesquelles sont situées à une certaine distance l'une de l'autre par un écarteur (32), et les zones actives (12) étant respectivement situées dans un évidement de l'écarteur (32), **caractérisé par** une enveloppe protectrice (20) flexible supplémentaire en matière imperméable à l'eau.

2. Tapis détecteur selon la revendication 1, **caractérisé en ce que** l'enveloppe protectrice (20) entoure complètement le tapis détecteur (10).

3. Tapis détecteur selon la revendication 1, **caractérisé en ce que** l'enveloppe protectrice (20) entoure complètement les bandes de connexion (14) du tapis détecteur (10).

4. Tapis détecteur selon l'une des revendications 1 à 3, **caractérisé en ce que** l'enveloppe protectrice (20) comporte un récipient de compensation qui communique avec l'enveloppe protectrice (20) de manière à conduire un fluide.

5. Tapis détecteur selon la revendication 4, **caractérisé en ce que** le récipient de compensation est assemblé en une seule pièce avec l'enveloppe protectrice (20).

6. Tapis détecteur selon l'une des revendications 4 ou 5, **caractérisé en ce que** le récipient de compensation communique avec l'enveloppe protectrice (20) par l'intermédiaire d'un canal de liaison prolongé.

7. Tapis détecteur selon l'une des revendications 1 à 6, **caractérisé en ce que** l'enveloppe protectrice (20) comporte un orifice de ventilation (22) qui est recouvert d'une matière perméable aux gaz, mais imperméable à l'eau.

8. Tapis détecteur selon l'une des revendications 1 à 7, **caractérisé en ce que** l'enveloppe protectrice (20) comporte une ou plusieurs attaches de fixation.

9. Tapis détecteur selon l'une des revendications 1 à 8, **caractérisé en ce que** l'enveloppe protectrice (20) forme des ponts de connexion (26) entre différentes bandes de connexion (14) flexibles.

10. Tapis détecteur selon l'une des revendications précédentes, **caractérisé en ce que** les bandes de connexion (14) sont soudées dans l'enveloppe protectrice (20).

11. Tapis détecteur selon l'une des revendications précédentes, **caractérisé en ce que** l'enveloppe protectrice (20) entoure le tapis détecteur (10) avec un certain jeu.

12. Tapis détecteur selon l'une des revendications précédentes, **caractérisé en ce que** l'enveloppe protectrice (20) comprend une feuille de PE.

13. Tapis détecteur selon l'une des revendications précédentes, **caractérisé en ce que** l'enveloppe protectrice (20) comprend une feuille métallisée.

14. Tapis détecteur selon l'une des revendications précédentes, **caractérisé en ce que** l'enveloppe protectrice (20) comprend une feuille imperméable aux UV.
